# EUROPÄISCHE PATENTSCHRIFT

(11) **EP 2 147 620 B1**
(45) Veröffentlichungstag und Bekanntmachung des Hinweises auf die Patenterteilung: **05.09.2012**
(21) Anmeldenummer: 09009156.2
(22) Anmeldetag: 14.07.2009
(51) Int. Cl.: A47J 31/46, F16D 7/04

(54) **Überlastkupplung**
Overload coupling
Couple anti-surcharge

(30) Priorität: 23.07.2008 DE 202008009932 U
(43) Veröffentlichungstag der Anmeldung: 27.01.2010
(73) Patentinhaber: Eugster/Frismag AG, 8580 Amriswil (CH)
(72) Erfinder: Eicher, Heinz, 8645 Jona (CH)
(74) Vertreter: Schubert, Siegmar

(56) Entgegenhaltungen:
- WO-A-2006/091114
- DE-C- 887 400
- GB-A- 2 022 199
- US-A1- 2005 217 960
- US-A1- 2008 185 252

## Beschreibung

Die Erfindung betrifft eine Überlastkupplung nach dem Oberbegriff des Anspruchs 1, wie aus dem Dokument GB 2 022 199 A bekannt, die insbesondere zum Einsatz in einer Mahlwerkskaffeemühle vorgesehen ist.

Generell werden zum Antrieb von Mahlwerkskaffeemühlen Antriebssysteme verwendet, in denen zwischen einem elektrischen Antriebsmotor und einem Mahlwerk eine Überlast- oder Drehmomentkupplung angeordnet ist. Eine solche Kupplung ist erforderlich, um bei einer Blockierung des Mahlwerkes, die insbesondere durch nichtmahlfähige Fremdkörper im Mahlgut verursacht werden, eine Zerstörung des Mahlwerkes oder des Antriebsmotors oder anderer Teile des Antriebssystems zu vermeiden, die antriebstechnisch zwischen dem Antriebsmotor und dem Mahlwerk angeordnet sind.

Zum gattungsgemäßen Stand der Technik, der aus der Praxis bekannt ist, gehören Überlastkupplungen, bei denen ein mit dem Antriebsmotor bzw. Antriebsaggregat kraftschlüssig verbundener antriebsseitiger Kupplungskörper in einem topfartigen, mit dem anzutreibenden Mahlwerk verbundenen abtriebsseitigen Kupplungskörper angeordnet ist. Der antriebsseitige Kupplungskörper ist mit radial angeordneten Kammern ausgestattet, in denen federbelastete Kugeln nach außen in Einbuchtungen gedrückt werden, die an einer inneren Umfangswand des abtriebsseitigen Kupplungskörpers ausgebildet sind, und zwar so, dass die Kugeln hälftig in den Kammern in dem abtriebsseitigen Kupplungsteil und hälftig in den Kammern des antriebsseitigen Kupplungsteils hineinragen.

Durch die damit erzielte kraftschlüssige Verbindung zwischen dem antriebsseitigen Kupplungskörper und dem abtriebsseitigen Kupplungskörper wird normalerweise der abtriebsseitige Kupplungskörper mit gleicher Drehzahl wie der antriebsseitige Kupplungsteil in Drehung versetzt. Bei einer Überlastung oder Blockierung des Mahlwerkes werden die Kugeln von Flanken der Einbuchtungen gegen die Federkraft in ihre Kammern eingedrückt und die kraftschlüssige Verbindung zwischen beiden Kupplungskörpern wird im wesentlichen aufgehoben. - Nachteilig sind bei diesen bekannten Überlastkupplungen eine teilweise umständliche Montage bei der Herstellung, da die Federn in den Kammern das Einlegen der Kugeln behindern, und im Betrieb der gefertigten Überlastkupplung ein hoher Verschleiß an Kanten der Einbuchtungen, insbesondere, weil nach dem Lösen der kraftschlüssigen Verbindung zwischen den beiden Kupplungskörpern der antriebsseitige Kupplungskörper durch das Antriebsaggregat weiterhin in Rotation versetzt wird.

Um dem abzuhelfen liegt der Erfindung die Aufgabe zugrunde, eine Überlastkupplung der eingangs genannten Gattung so auszubilden, dass die Kupplung leicht montierbar ist und im Betrieb verschleißarm ist, so dass eine lange Lebensdauer erwartet werden kann.

Diese Aufgabe wird durch die in Anspruch 1 angegebenen Merkmale gelöst.

Weil der antriebsseitige Kupplungskörper als annährend S-förmiges einstükkiges Federelement ausgebildet ist, das mindestens einen ersten, im wesentlichen radial zu der angetriebenen Welle orientierten Schenkel sowie einen zweiten, gegenüber dem ersten Schenkel abgewinkelten Schenkel umfasst, der im montierten Zustand der Überlastkupplung im wesentlichen entlang einer inneren Umfangswand des topfförmig ausgebildeten abtriebsseitigen Kupplungskörpers verläuft, braucht bei der Montage der Überlastkupplung das in den topfförmigen abtriebsseitigen Kupplungskörper einzusetzende annähernd S-förmigen Federelement nur in Richtung zu der Mittelachse des antriebsseitigen Kupplungskörpers eingedrückt zu werden, wonach der topfförmige abtriebsseitige Kupplungskörper über das S-förmige Federelement in axialer Richtung bzw. Richtung der obengenannten Welle geschoben werden kann. Weil weiterhin an der äußeren Umfangswand des zweiten Schenkels des Federelements ein erstes wellenförmiges Formelement angeordnet ist, welches geeignet ist, in ein korrespondierendes zweites wellenförmiges Formelement, das an der inneren Umfangswand des topfförmigen abtriebsseitigen Kupplungskörper angeordnet ist, lösbar einzugreifen, tritt nur ein geringer Verschleiß auf, wenn im Überlastfall das erste wellenförmige Formelement über das korrespondierende zweite wellenförmige Formelement gleitet.

Im einzelnen ist die verschleißarme Ausbildung der wellenförmigen Formelemente gemäß Anspruch 3 dadurch realisiert, dass das erste wellenförmige Formelement eine wellenförmigen nockenartige Erhebung ist, die in die äußere Umfangswand des zweiten Schenkels des Federelements stetig bzw. glatt übergeht, und dass zweite korrespondierende wellenförmige Formelement eine wellenförmige Einbuchtung in der inneren Umfangswand des topfförmigen Kupplungskörpers ist, die in die innere Umfangswand des topfförmigen Kupplungskörpers stetig bzw. glatt übergeht und geeignet ist, das erste wellenförmige Formelement im wesentlichen bündig aufzunehmen.

Das erste wellenförmige Formelement stellt somit quasi nur einen Wellenberg dar und das zweite wellenförmige Formelement ein Wellental.

Es ist aber auch möglich, dass analog umgekehrt nach Anspruch 4 in der Überlastkupplung das erste wellenförmige Formelement eine wellenförmige Einbuchtung ist, die in die äußere Umfangswand des zweiten Schenkel des Federelements stetig und glatt übergeht, und das korrespondierende zweite wellenförmige Formelement eine wellenförmige nockenartige Erhebung an der inneren Umfangswand des topfförmigen Kupplungskörpers ist, die in die innere Umfangswand stetig bzw. glatt übergeht und geeignet ist, das erste wellenförmige Formelement im wesentlichen bündig aufzunehmen.

Das annähernd S-förmige Federelement, als welches der antriebsseitige Kupplungskörper einstückig ausgebildet ist, umfasst bevorzugt nach Anspruch 2 zwei im wesentlichen radial zu der angetriebenen Welle orientierte erste Schenkel, die in der Mitte des Federelements ineinander übergehen, nach außen radial zueinander entgegengesetzt verlaufen und jeweils in zweite Schenkel übergehen, die im wesentlichen entlang der inneren Umfangswand des topfförmigen abtriebsseitigen Kupplungskörpers in zueinander entgegengesetzten Richtungen verlaufen, wobei an den äußeren Umfangswänden der zweiten Schenkel jeweils ein erstes wellenförmiges Formelement angeordnet ist, welches geeignet, ist in jeweils ein korrespondierendes zweites wellenförmiges Formelement, welches an der inneren Umfangswand des topfförmigen abtriebsseitigen Kupplungskörpers angeordnet ist, lösbar einzugreifen. Bei dieser rotationssymmetrischen Ausbildung des S-förmigen Federelements übt dieses auf die angetriebene Welle praktisch kein Biegemoment aus, sondern nur ein Torsionsmoment, welches die Welle nicht ausbiegt. Es ist jedoch auch denkbar, das S-förmige Federelement vereinfacht nur mit einem ersten, zu der angetriebenen Welle radial orientierten Schenkel auszubilden, der aussen in den zweiten Schenkel übergeht, welcher im wesentlichen entlang der inneren Umfangswand des topfförmigen abtriebsseitigen Kupplungskörpers verläuft, wobei der zweite Schenkel das erste wellenförmige Formelement aufweist. Das annähernd S-förmige Federelement hat somit annähernd die Form eines halben großen "S" oder auch annähernd die Form eines kleinen "s" in lateinischer Schrift.

Das annähernd S-förmige Federelement in den oben genannten Ausbildungen wird gemäß Anspruch 5 zweckmässig aus einem federnden Kunststoff gefertigt, wodurch der Herstellungsaufwand niedrig ist.

Der abtriebsseitige topfförmige Kupplungskörper besteht zweckmässig gemäß Anspruch 6 ebenfalls aus einem Kunststoff.

Insbesondere in dem Fall, in dem das annähernd S-förmige Federelement und der abtriebsseitige Kupplungskörper im wesentlichen aus Kunststoffen hergestellt sind, werden zur Erhöhung der Verschleißfestigkeit als wellenförmige Einbuchtungen nach Anspruch 7 metallische Inlays eingesetzt bzw. als wellenförmige nockenartigen Erhebungen metallische Inlays nach Anspruch 8.

Zweckmässig erstreckt sich das annähernd S-förmige Federelement in den topfförmigen abtriebsseitigen Kupplungskörper in axialer Richtung über eine Mindestlänge, die insbesondere nach Anspruch 9 größer ist als der Radius der angetriebenen Welle. Damit kann das annähernd S-förmige Federelement kippsicher auf der angetriebenen Welle aufgebracht werden und das mit der Überlastkupplung übertragbare Drehmoment ist bei kompakten Abmessungen groß.

Zu der Dimensionierung der Elemente der Überlastkupplung gehört nach Anspruch 10, das eine Federkraft des annähernd S-förmigen Federelements des antriebsseitigen Kupplungskörpers an dessen Enden so bemessen ist, dass bei Überschreiten eines vorgegebenen Lastmomentes oder Blockieren des abtriebsseitigen Kupplungskörpers die nockenartigen Erhebungen des einen Kupplungskörpers aus den Einbuchtungen des anderen Kupplungskörpers gegen die Federkraft des annähernd S-förmigen Federelements gleiten.

Um den Verschleiß der Überlastkupplung im Überlastfall gering zu halten, weist nach Anspruch 11 der abtriebsseitige Kupplungskörper oder die mit ihm antriebstechnisch verbundene Arbeitseinheit eine Umdrehungserfassungsanordnung auf, die eine Drehung des abtriebsseitigen Kupplungskörpers bzw. der mit ihm verbundenen Funktionseinheit erfasst und bei deren Stillstand trotz eingeschaltetem Antriebsaggregat, insbesondere einem Elektromotor, der Drehmomentkupplung, dieses abschaltet.

Die Umdrehungserfassungsanordnung kann einen optischen oder magnetischen bzw. induktiven oder einen kapazitiven Sensor und eine elektrische Schaltungsanordnung umfassen, die einen Schalter in einer Stromzuführung des Antriebsaggregats betätigt.

Ein Ausführungsbeispiel der Erfindung wird im Folgenden anhand einer Zeichnung mit zwei Figuren erläutert, woraus sich weitere vorteilhafte Einzelheiten der erfinderischen Gestaltung ergeben können. Es zeigen:
- Figur 1: eine Ansicht auf die Überlastkupplung in axialer Richtung einer Mittelachse und
- Figur 2: einen Längsschnitt durch die Überlastkupplung gemäß Figur 1 in der Schnittebene AA.

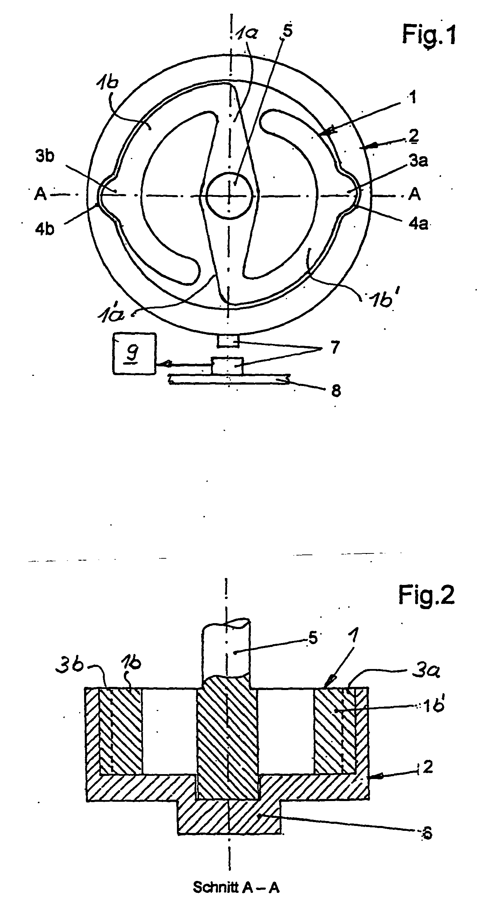

In den Figuren 1 und 2 ist ein erster, antriebsseitiger Kupplungskörper mit 1 bezeichnet, der über eine angetriebene Welle 5 von einem nicht dargestellten Antriebsaggregat, einem Elektromotor, angetrieben werden kann. Der erste Kupplungskörper 1 ist, wie in Figur 1 gezeigt, als annähernd S-förmiges Federelement ausgebildet, welches zwei im wesentlichen radial zu der angetriebenen Welle 5 orientierte und an dieser befestigte erste Schenkel 1a, 1a' aufweist, die in der Mitte des Federelements 1, also an der angetriebenen Welle 5 ineinander übergehen. Die nach außen radial und zueinander entgegengesetzt verlaufenden ersten Schenkel 1a, 1a' gehen aussen, d.h. an einer inneren Umfangswand, die nicht bezeichnet ist, des zweiten, abtriebsseitigen topfförmigen Kupplungskörpers 2 in zwei Schenkel 1b, 1 b' über, die entlang der inneren Umfangswand des topfförmigen abtriebsseitigen Kupplungskörpers 2 in zueinander entgegengesetzten Richtungen abgewinkelt sind. An ebenfalls nicht bezeichneten äußeren Umfangswänden der zweiten Schenkel 1 b, 1 b' sind etwa in deren Mitte wellenförmige nockenartige Erhebungen 3a, 3b ausgeformt, deren Form in einzelnen aus Figur 1 hervorgeht. Insbesondere gehen die wellenförmigen nockenartigen Erhebungen stetig bzw. glatt in die benachbarten Bereiche der äußeren Umfangswand der zweiten Schenkel 1b, 1 b' über. In dem in der Zeichnung dargestellten, nicht überlasteten Zustand der Überlastkupplung greifen die ringförmigen nockenartigen Erhebungen 3a, 3b in wellenförmige Einbuchtungen 4a, 4b in der nicht bezeichneten inneren Umfangswand des topfförmigen - siehe auch Figur 2 - Kupplungskörpers 2 ein.

Aus Figur 1 ergibt sich die rotationssymmetrische Ausbildung des ersten Kupplungskörpers 1 und des Inneren des zweiten Kupplungskörpers 2 um eine zentrale Achse als Schnittlinie zwischen den mit strichpunktierten Linien AA und BB angedeuteten Ebenen. Mit dieser Ausbildung des ersten Kupplungskörpers 1 wird eine einseitige Querbelastung der angetriebenen Welle 5 vermieden.

Aus Figur 1 ergibt sich auch die wellenförmige Ausbildung der nockenartigen Erhebungen 3a, 3b, die in die innere Umfangswand des zweiten Kupplungskörpers stetig, d.h. glatt, übergehen.

Die axiale Ausdehnung des ersten Kupplungskörpers 1 bzw. annähernd S-förmigen Federelements in Relation zu dem Radius der angetriebenen Welle 5 zeigt Figur 2. Hierin ist auch ein Abtriebselement 6 an dem zweiten Kupplungskörper 2 dargestellt, welches als Zapfen 8 ausgebildet ist. Mit dem Zapfen 8 kann die nicht dargestellte Arbeitseinheit, insbesondere ein Mahlwerk, in Drehmoment übertragender Verbindung stehen.

Im Betrieb der Überlastkupplung werden im Überlastfall die wellenförmigen nockenartigen Erhebungen 3a, 3b aus den wellenförmigen Einbuchtungen 4a, 4b radial nach innen in Richtung auf die Mittelachse bzw. angetriebene Welle 5 eingedrückt, wodurch die Drehmoment übertragende Verbindung zwischen den wellenförmigen nockenartigen Erhebungen 3a, 3b und den ringförmigen Einbuchtungen 4a, 4b gelöst werden, so dass die wellenförmigen nockenartigen Erhebungen 3a, 3b auf der inneren Umfangswand des zweiten Kupplungskörpers 2 gleiten können und sich der erste Kupplungskörper 1 weiterdrehen kann.

Um zu verhindern, dass im Überlastfall durch lang andauerndes Weiterdrehen des ersten Kupplungskörpers 1 die nockenartigen Erhebungen 3a, 3b und die wellenförmigen Einbuchtungen 4a, 4b abgenutzt werden, wird der nicht dargestellte Antriebsmotor als Antriebsaggregat mittels einer Umdrehungserfassungsanordnung 7 und einer Schaltungsanordnung 9 abgeschaltet. Hierzu umfasst ein Sensor auf dem ortsfesten Träger 8 ein an einer äußeren Umfangswand des zweiten Kupplungskörpers 2 angebrachtes Betätigungselement und somit die Drehung des zweiten Kupplungskörper 2. Die erfasste Drehung wird in einer Schaltungsanordnung 9 ausgewertet, die den Antriebsmotor im Überlastfall abschalten kann.

Alternativ kann die Umdrehungserfassungsanordnung durch eine Stromerfassungsanordnung realisiert werden, die den von dem Antriebsaggregat aufgenommenen Strom erfasst und bei Überschreiten einer vorgegebenen Stromstärke das Antriebsaggregat abschaltet.

### Bezugszahlen

- 1: erster, antriebsseitiger Kupplungskörper (annähernd S-förmiges Federelement)
- 1a: erster Schenkel
- 1a': erster Schenkel
- 1b: zweiter Schenkel
- 1b': zweiter Schenkel
- 2: zweiter abtriebsseitiger topfförmiger Kupplungskörper
- 3a: wellenförmige nockenartige Erhebung
- 3b: wellenförmige nockenartige Erhebung
- 4a: wellenförmige Einbuchtung
- 4b: wellenförmige Einbuchtung
- 5: angetriebene Welle
- 6: Abtriebselement (Zapfen)
- 7: Umdrehungserfassungsanordnung
- 8: ortsfester Träger
- 9: Schaltungsanordnung

## Patentansprüche

1. Überlastkupplung zur Begrenzung eines übertragenen Drehmomentes mit zwei Kupplungskörpern (1, 2),deren Mittelachsen miteinander fluchten, zum Antrieb einer Mahlwerkskaffeemühle als Arbeitseinheit, wobei ein erster der beiden Kupplungskörper (1, 2) als antriebsseitiger Kupplungskörper (1) topfförmig ist und mit einer insbesondere elektromotorisch angetriebenen Welle (5) verbunden ist, wobei ein zweiter der beiden Kupplungskörper (1, 2) als abtriebsseitiger Kupplungskörper (2) mit der Arbeitseinheit in kraftschlüssiger Verbindung steht und wobei der antriebsseitige Kupplungskörper (1) mindestens ein Federelement aufweist, welches geeignet ist, eine lösbare kraftschlüssige Verbindung zwischen dem antriebsseitigen Kupplungskörper (1) und dem abtriebsseitigen Kupplungskörper (2) herzustellen,
**dadurch gekennzeichnet,**
**dass** der antriebsseitige Kupplungskörper (1) als annähernd S-förmiges einstückiges Federelement ausgebildet ist, das mindestens einen ersten, im wesentlichen radial zu der angetriebenen Welle (5) orientierten Schenkel (1a, 1a')sowie einen zweiten, im wesentlichen entlang einer inneren Umfangswand des topfförmigen abtriebsseitigen Kupplungskörpers (2) verlaufenden Schenkel (1b, 1b') umfasst, und
**dass** an einer äußeren Umfangswand des zweiten Schenkels (1b, 1b') des Federelements ein erstes wellenförmiges Formelement (3a, 3b) angeordnet ist, welches geeignet ist, in ein korrespondierendes zweites wellenförmiges Formelement (4a, 4b), das an der inneren Umfangswand des topfförmigen abtriebsseitigen Kupplungskörpers (2) angeordnet ist, bei Überschreiten eines vorgegebenen Werts des mit der Überlastkupplung übertragenen Drehmoments lösbar, einzugreifen.

2. Überlastkupplung nach Anspruch 1,
**dadurch gekennzeichnet,**
**dass** der antriebsseitige Kupplungskörper (1) als annähernd S-förmiges Federelement einstückig ausgebildet ist, das zwei im wesentlichen radial zu der angetriebenen Welle (5) orientierte erste Schenkel (1a, 1a') umfasst, die in der Mitte des Federelements ineinander übergehen, nach außen radial zueinander entgegengesetzt verlaufen und in zweite Schenkel (1b, 1b') übergehen, die im wesentlichen entlang der inneren Umfangswand des topfförmigen abtriebsseitigen Kupplungskörpers (2) in zueinander entgegengesetzten Richtungen verlaufen und an deren äußeren Umfangswänden jeweils ein erstes wellenförmiges Formelement (3a, 3b) angeordnet ist, welches geeignet ist, in jeweils ein korrespondierendes zweites wellenförmiges Formelement (4a, 4b), das an der inneren Umfangswand des topfförmigen abtriebsseitigen Kupplungskörpers (2) angeordnet ist, lösbar einzugreifen.

3. Überlastkupplung nach Anspruch 1 oder 2,
**dadurch gekennzeichnet,**
**dass** das erste wellenförmige Formelement eine wellenförmige nockenartige Erhebung (3a, 3b) ist, die in die äußere Umfangswand des zweiten Schenkels (1b, 1b') des Federelements stetig bzw. glatt übergeht, und dass das zweite korrespondierende wellenförmige Formelement (4a, 4b) eine wellenförmige Einbuchtung in der inneren Umfangswand des topfförmigen Kupplungskörpers (2) ist, die in die innere Umfangswand des topfförmigen Kupplungskörpers (2) stetig bzw. glatt übergeht und geeignet ist, das erste wellenförmige Formelement (3a, 3b) im wesentlichen bündig aufzunehmen.

4. Überlastkupplung nach Anspruch 1 oder 2,
**dadurch gekennzeichnet,**
**dass** das erste wellenförmige Formelement eine wellenförmige Einbuchtung ist, die in die äußere Umfangswand des zweiten Schenkels des Federelements stetig und glatt übergeht, und
**dass** das korrespondierende zweite wellenförmige Formelement eine wellenförmige nockenartige Erhebung an der inneren Umfangswand des topfförmigen Kupplungskörpers ist, die in die innere Umfangswand stetig bzw. glatt übergeht und geeignet ist, das erste wellenförmige Formelement im wesentlichen bündig aufzunehmen.

5. Überlastkupplung nach einem der vorangehenden Ansprüche,
**dadurch gekennzeichnet,**
**dass** das annähernd S-förmige Federelement (1) aus einem federnden Kunststoff gefertigt ist.

6. Überlastkupplung nach einem der vorangehenden Ansprüche,
**dadurch gekennzeichnet,**
**dass** der abtriebsseitige Kupplungskörper (2) aus Kunststoff besteht.

7. Überlastkupplung nach einem der vorangehenden Ansprüche,
**dadurch gekennzeichnet,**
**dass** die wellenförmigen Einbuchtungen (4a, 4b) metallische Inlays sind.

8. Überlastkupplung nach einem der vorangehenden Ansprüche,
**dadurch gekennzeichnet,**
**dass** dass die wellenförmigen nockenartigen Erhebungen (3a, 3b) metallische Inlays sind.

9. Überlastkupplung nach einem der vorangehenden Ansprüche,
**dadurch gekennzeichnet,**
**dass** sich das annähernd S-förmige Federelement (1) in dem topfförmigen abtriebsseitigen Kupplungskörper (2) in axialer Richtung über eine Länge erstreckt, die größer als der Radius der angetriebenen Welle (5) ist.

10. Überlastkupplung nach einem der vorangehenden Ansprüche,
**dadurch gekennzeichnet,**
**dass** eine Federkraft des annähernd S-förmigen Federelements des antriebsseitigen Kupplungskörpers (1) an dessen Enden so bemessen ist, dass bei Überschreiten eines vorgegebenen Drehmomentes oder Blockieren des abtriebsseitigen Kupplungskörpers (2) die nockenartigen Erhebungen (3a, 3b) des einen der Kupplungskörper (1, 2) aus den Einbuchtungen des anderen der Kupplungskörper (1, 2) gegen die Federkraft des annähernd S-förmigen Federelements (1) gleiten.

11. Überlastkupplung nach einem der vorangehenden Ansprüche,
**dadurch gekennzeichnet,**
**dass** der abtriebsseitige Kupplungskörper (2) oder die mit ihm antriebstechnisch verbundene Arbeitseinheit eine Umdrehungs-Erfassungsanordnung (7) aufweist, die eine Drehung des abtriebsseitigen Kupplungskörpers (2) bzw. der mit ihm verbundenen Funktionseinheit erfasst und bei deren Stillstand trotz eingeschaltetem Antriebsaggregat der Drehmomentenkupplung das Antriebsaggregat abschaltet.

## Claims

1. Overload coupling for limitation of a transmitted torque comprising two coupling bodies (1, 2) the middle axes of which are aligned relative to each other, for driving a grinding-mill type coffee mill as operating unit, wherein a first one of the two coupling bodies (1, 2), as input side coupling body (1), is pot-shaped and is connected with a shaft (5) driven particularly by an electromotor, wherein a second of the two coupling bodies (1, 2) as output side coupling body (2) is frictionally connected with the operating unit, and wherein the input side coupling body (1) includes at least one spring element which is suited to produce a releasable frictional connection between the input side coupling body (1) and the output side coupling body (2)
**characterized in**
**that** the input side coupling body (1) is formed as one approximately S-shaped spring element comprising at least a first leg (1a, 1a') oriented substantially radially relative to the driven shaft (5) and a second leg (1b, 1b') extending substantially along an inner circumferential wall of the pot-shaped output coupling body (2), and
**that** on an outer circumferential wall of the second leg (1b, 1b') of the spring element a first wave-shaped form element (3a, 3b) is provided which, when a predetermined value of the torque transmitted by the overload coupling is exceeded, is suited to detachably engage in a corresponding second wave-shaped form element (4a, 4b) provided on the inner circumferential wall of the pot-shaped output coupling body (2).

2. Overload coupling according to claim 1,
**characterized in**
**that** the input side coupling body (1) is formed as one approximately S-shaped spring element comprising at least two first legs (1a, 1a') which are oriented substantially radially relative to the driven shaft (5), which pass in the middle of the spring element into each other, which extend towards the outside radially opposed relative to each other and pass over into second legs (1b, 1b') extending substantially along the inner circumferential wall of the pot-shaped output side coupling body (2) in direction opposed relative to each other, and on the outer circumferential walls of which a first wave-shaped form element (3a, 3b) is arranged each which is suited to engage releasably into a corresponding second wave-shaped form element (4a, 4b) each arranged on the inner circumferential wall of the pot-shaped outside coupling body (2).

3. Overload coupling according to claim 1 or 2,
**characterized in**
**that** the first wave-shaped form element is a wave-shaped cam-like elevation continuously or smoothly passing over into the outer circumferential wall of the second leg (1 b, 1 b') of the spring element, and
**that** the second corresponding wave-shaped form element (4a, 4b) is a wave-shaped recess in the inner circumferential wall of the pot-shaped coupling body (2) continuously or smoothly passing over into the inner circumferential wall of the pot-shaped coupling body (2) and which is suited to receive the first wave-shaped form element (3a, 3b) substantially flush.

4. Overload coupling according to claim 1 or 2,
**characterized in**
**that** the first wave-shaped form element is a wave-shaped recess continuously or smoothly passing over into the outer circumferential wall of the second leg of spring element and
**that** the corresponding second wave-shaped form element is a wave-shaped cam like elevation on the inner circumferential wall of the pot-shaped coupling body continuously or smoothly passing over into the inner circumferential wall and which is suited to receive the first waveshape form element substantially flush

5. Overload coupling according to one of the foregoing claims,
**characterized in**
**that** the approximately S-shaped spring element (1) is made of a resilient plastic material.

6. Overload coupling according to one of the foregoing claims,
**characterized in**
**that** the output side coupling body consists of plastic material.

7. Overload coupling according to one of the foregoing claims,
**characterized in**
**that** the wave-shaped recesses (4a, 4b) are metallic inlays.

8. Overload coupling according to one of the foregoing claims,
**characterized in**
**that** the wave-shaped cam-like elevations (3a, 3b) are metallic inlays.

9. Overload coupling according to one of the foregoing claims,
**characterized in**
**that** the approximately S-shaped spring element (1) in the pot-shaped output side coupling body (2) extends in axial direction about a length larger than the radius of the driven shaft (5).

10. Overload coupling according to one of the foregoing claims,
**characterized in**
**that** a spring force of the approximately S-shaped spring element of the input-side coupling body (1) is so dimensioned at its ends that when exceeding a predetermined torque or blocking of the output-side coupling body (2), the cam-like elevations (3a, 3b) of either coupling body (1, 2) glide out of the recesses of the other coupling body (1, 2) contrary to the spring force of the approximately S-shaped spring element (1).

11. Overload coupling according to one of the foregoing claims,
**characterized in**
**that** the output side coupling body (2) or the operating unit drive-technically connected with it comprises a rotation detection arrangement (7) which detects a rotation of the output side coupling body (2), or of the function unit connected with it and in case of a standstill in spite of the activated drive unit of the torque coupling switches the drive unit off.

## Revendications

1. Accouplement de surcharge servant à limiter un couple transmis, comportant deux corps d'accouplement (1, 2) dont les axes médians sont en alignement mutuel, et destiné à l'entraînement d'un moulin à café à mécanisme broyeur en tant qu'unité de travail, dans lequel un premier des deux corps d'accouplement (1, 2), en tant que corps d'accouplement du côté menant (1), est en forme de S et est relié à un arbre (5) entraîné en particulier par un moteur électrique, dans lequel un second des deux corps d'accouplement (1, 2), en tant que corps d'accouplement du côté mené (2), est en liaison par adhérence avec l'unité de travail, et dans lequel le corps d'accouplement du côté menant (1) présente au moins un élément élastique qui est apte à créer une liaison par adhérence avec possibilité de dégagement entre le corps d'accouplement du côté menant (1) et le corps d'accouplement du côté mené (2),
**caractérisé en ce que** le corps d'accouplement du côté menant (1) est exécuté en tant qu'élément élastique d'une seule pièce, à peu près en forme de S, qui comprend au moins une première branche (1a, 1a') orientée sensiblement radialement par rapport à l'arbre entraîné (5), ainsi qu'une seconde branche (1b, 1b') s'étendant sensiblement le long d'une paroi périphérique intérieure du corps d'accouplement du côté mené en forme de godet (2), et
**en ce que**, sur une paroi périphérique extérieure de la seconde branche (1b, 1b') de l'élément élastique est disposé un premier élément façonné de forme ondulée (3a, 3b), qui est apte à s'engager dans un second élément façonné de forme ondulée correspondant (4a, 4b) qui est disposé sur la paroi périphérique intérieure du corps d'accouplement du côté mené en forme de godet (2), avec possibilité de s'en dégager, en cas de dépassement d'une valeur prédéterminée du couple transmis au moyen de l'accouplement de surcharge.

2. Accouplement de surcharge selon la revendication 1, **caractérisé en ce que** le corps d'accouplement du côté menant (1) est réalisé en une seule pièce sous la forme d'un élément élastique à peu près en forme de S, qui comprend deux premières branches (1a, la'), orientées sensiblement radialement par rapport à l'arbre entraîné (5), qui fusionnent au milieu de l'élément élastique, s'étendent radialement vers l'extérieur, l'une à l'opposé de l'autre, et se modifient en des secondes branches (1b, 1b') qui s'étendent sensiblement le long de la paroi périphérique intérieure du corps d'accouplement du côté mené en forme de godet (2) dans des directions mutuellement opposées, et sur la paroi périphérique extérieure de chacune desquelles est disposé un premier élément façonné de forme ondulée (3a, 3b) qui est apte à s'engager avec possibilité de dégagement dans un second élément façonné de forme ondulée correspondant (4a, 4b) qui est disposé sur la paroi périphérique intérieure du corps d'accouplement du côté mené en forme de godet (2).

3. Accouplement de surcharge selon la revendication 1 ou 2, **caractérisé en ce que** le premier élément façonné de forme ondulée est un bossage de forme ondulée (3a, 3b) de type came qui se modifie progressivement et sans aspérités en la paroi périphérique extérieure de la seconde branche (1b, 1b') de l'élément élastique et **en ce que** le second élément façonné de forme ondulée (4a, 4b) correspondant est une encoche de forme ondulée de la paroi périphérique intérieure du corps d'accouplement en forme de godet (2) qui se modifie progressivement et sans aspérités en la paroi périphérique intérieure du corps d'accouplement en forme de godet (2), et est apte à recevoir sensiblement à fleur le premier élément façonné de forme ondulée (3a, 3b).

4. Accouplement de surcharge selon la revendication 1 ou 2, **caractérisé en ce que** le premier élément façonné de forme ondulée est une encoche de forme ondulée qui se modifie progressivement et sans aspérités en la paroi périphérique extérieure de la seconde branche de l'élément élastique, et **en ce que** le second élément façonné de forme ondulée correspondant est un bossage de forme ondulée de type came, prévu sur la paroi périphérique intérieure du corps d'accouplement en forme de godet, qui se modifie progressivement et sans aspérités en la paroi périphérique intérieure et est apte à recevoir sensiblement à fleur le premier élément façonné de forme ondulée.

5. Accouplement de surcharge selon l'une des revendications précédentes, **caractérisé en ce que** l'élément élastique (1) à peu près en forme de S est fabriqué à partir d'une matière plastique élastique.

6. Accouplement de surcharge selon l'une des revendications précédentes, **caractérisé en ce que** le corps d'accouplement du côté mené (2) est fait de matière plastique.

7. Accouplement de surcharge selon l'une des revendications précédentes, **caractérisé en ce que** les encoches de forme ondulée (4a, 4b) sont des insertions métalliques.

8. Accouplement de surcharge selon l'une des revendications précédentes, **caractérisé en ce que** les bossages de forme ondulée de type came (3a, 3b) sont des insertions métalliques.

9. Accouplement de surcharge selon l'une des revendications précédentes, **caractérisé en ce que** l'élément élastique (1) à peu près en forme de S s'étend dans la direction axiale à l'intérieur du corps d'accouplement du côté mené en forme de godet (2) sur une longueur qui est plus grande que le rayon de l'arbre entraîne (5).

10. Accouplement de surcharge selon l'une des revendications précédentes, **caractérisé en ce qu'**une élasticité de l'élément élastique à peu près en forme de S du corps d'accouplement du côté menant (1), à ses extrémités, est calculée de telle manière qu'en cas de dépassement d'un couple prédéterminé ou en cas de blocage du corps d'accouplement du côté mené (2), les bossages de type came (3a, 3b) de l'un des corps d'accouplement (1, 2) s'échappent des encoches de l'autre des corps d'accouplement (1, 2) à l'encontre de l'élasticité de l'élément élastique à peu près en forme de S (1).

11. Accouplement de surcharge selon l'une des revendications précédentes, **caractérisé en ce que** le corps d'accouplement du côté mené (2), ou l'unité de travail qui y est reliée cinématiquement, comporte un dispositif de détection de la rotation (7) qui détecte une rotation du corps d'accouplement du côté mené (2) ou de l'unité fonctionnelle qui y est reliée et qui, si cette dernière est arrêtée en dépit du fait que le groupe d'entraînement de l'accouplement de couple est en marche, arrête le groupe d'entraînement.
